# EUROPEAN PATENT SPECIFICATION

(11) **EP 4 150 225 B1**
(45) Date of publication and mention of the grant of the patent: **17.01.2024**
(21) Application number: 20728975.2
(22) Date of filing: 14.05.2020
(51) Int. Cl.: F16D 1/076, F16D 1/08, F16D 1/092, F16D 1/108

(54) **JOINT ARRANGEMENT, ELECTRIC MOTOR AND INDUSTRIAL ACTUATOR**
GELENKANORDNUNG, ELEKTROMOTOR UND INDUSTRIELLER STELLANTRIEB
AGENCEMENT CONJOINT, MOTEUR ÉLECTRIQUE ET ACTIONNEUR INDUSTRIEL

(43) Date of publication of application: 22.03.2023
(73) Proprietor: ABB SCHWEIZ AG, 5400 Baden (CH)
(72) Inventor: SALOMONSSON, Dan, 722 33 Västerås (SE)
(74) Representative: Kransell & Wennborg KB
(86) International application number: PCT/EP2020/063481
(87) International publication number: WO 2021/228397

(56) References cited:
- WO-A1-97/25236
- WO-A1-2010/058719
- DE-A1-102004 061 451
- DE-A1-102013 208 163
- DE-A1-102015 209 559
- US-A- 5 607 263

## Description

### Technical Field

The present invention generally relates to a joint arrangement. In particular, a joint arrangement comprising a drive member and a driven member, an electric motor comprising a joint arrangement, and an industrial actuator comprising a joint arrangement, are provided.

### Background

An industrial robot may comprise a manipulator programmable in three or more axes. Some known industrial robots comprise an electric motor having a drive member and a pinion connected to the drive member to form a joint. The electric motor may be connected to a first link and the pinion may be used to drive a second link relative to the first link via a gearbox. Today, safety critical joints typically comprise either a press fit or a shape lock. A press fit may alternatively be referred to as an interference fit.

When the pinion is connected to the drive member by means of a press fit, such as a cylindrical press fit, safety against slippage between the drive member and the pinion can be provided by setting a press fit force high enough. Moreover, the press fit eliminates backlash between the drive member and the pinion, which is typically desired in the joints of an industrial robot. A special and calibrated press fit machine is however required to provide and control the press fit force. The press fit machine monitors the press fit force to ensure that a sufficient safety margin against slippage is provided. The press fit is performed at an assembly site remote from a work site of the industrial robot.

In case the pinion is connected to the drive member by means of a shape lock, safety against slippage between the drive member and the pinion is provided.

Examples of shape locks are keyways and splines. A shape lock however has performance issues due to the inherent backlash. Moreover, measures need to be taken in order to avoid fretting problems, for example the provision of grease and seals to keep the grease in the joint. Keyway joints or spline joints are also relatively expensive to produce. Keyway joints also need to be relatively bulky due to the disruptions of the shapes of the drive member and the pinion that introduce weaknesses. The shape lock may alternatively be referred to as a form lock.

EP 0845614 A2 discloses a polygonal coupling using a bore formed in a hub and a contoured section at the end of a shaft having the same polygonal cross-section, so that they fit together without play. The polygonal cross-section is cylindrical or has a slight conical taper, so that a play-free pressure seat is provided upon application of axial pressure.

DE 102015209559 A1 discloses a chassis actuator device comprising a torsion bar having a projection with a conical polygonal shape, a carrier having a recess with a tapered polygonal shape, and a connecting screw. The conical polygonal shapes are axially fixed to one another in a press fit via the connecting screw. The press fit can be varied by the tightening torque of the connecting screw.

DE 102013208163 A1 discloses a gear comprising a pinion having a plurality of non-round steps, an adapter, a washer and a screw.

DE 102004061451 A1 discloses a roller for textile material comprising a roll shaft, a hub and a screw.

WO 9725236 A1 discloses a steering device comprising a steering column having an end, a hub and a nut. The end comprises a stop surface, a grooved portion and a rod. The hub comprises a bore and a stop surface.

WO 2010058719 A1 discloses a device comprising an outer joint member having an axle part with a screw hole, a hub ring having a through hole, and a bolt member.

### Summary

In order to obtain a high enough press fit force to achieve a press fit between a drive member and a pinion that in practice cannot fail, a press fit machine is required. It is however not feasible to perform press fitting of a pinion to a drive member by means of a press fit machine when the drive member is already mounted to an industrial robot delivered to a customer. The field installation possibilities are in many cases limited or non-existing. Moreover, the remote press fitting of pinions to drive members leads to a requirement of a larger amount of spare parts.

One object of the present invention is to provide a joint arrangement that enables a driven member to be connected to a drive member in a simple manner.

A further object of the present invention is to provide a joint arrangement that is field attachable.

A still further object of the present invention is to provide a joint arrangement that eliminates backlash.

A still further object of the present invention is to provide a joint arrangement that prevents relative movement between a drive member and a driven member in case a press fit fails.

A still further object of the present invention is to provide a joint arrangement that enables a driven member to be disconnected from a drive member in a simple manner.

A still further object of the present invention is to provide a joint arrangement that is field detachable.

A still further object of the present invention is to provide a joint arrangement that provides a reliable operation.

A still further object of the present invention is to provide a joint arrangement that facilitates replacement of a part of a joint.

A still further object of the present invention is to provide a joint arrangement that provides a safe operation.

A still further object of the present invention is to provide a joint arrangement that has a compact design.

A still further object of the present invention is to provide a joint arrangement that has a cost-effective design.

A still further object of the present invention is to provide a joint arrangement that enables a number of spare parts to be reduced.

A still further object of the present invention is to provide a joint arrangement solving several or all of the foregoing objects in combination. In particular, one object is to provide a joint arrangement that is field attachable, that eliminates backlash and that prevents relative movement between a drive member and a driven member in case a press fit fails.

A still further object of the present invention is to provide an electric motor comprising a joint arrangement, which electric motor solves one, several or all of the foregoing objects.

A still further object of the present invention is to provide an industrial actuator comprising a joint arrangement or an electric motor, which industrial actuator solves one, several or all of the foregoing objects.

According to one aspect, there is provided a joint arrangement according to claim 1.

When the driven member is connected to the drive member, the drive member and the driven member form a joint for transmitting rotation. The joint comprises a press fit and a shape lock. The joint constitutes a field attachable non-backlash safety joint. The drive member and the driven member may be coaxial with the rotation axis when the driven member is connected to the drive member.

The drive member may be a female part and the driven member may be a male part. Alternatively, or in addition, the drive member may be a drive member shaft and the driven member may be a driven member shaft.

The shape lock is relatively loose. For example, the shape lock may not resist the establishment of the press fit. The shape lock prevents slipping between the drive member and the driven member should the press fit fail. The shape lock may thus be referred to as a secondary joint lock or a backup joint lock. One reason for such failure of the press fit may be the execution of an emergency stop. Execution of an emergency stop may cause an uncontrolled acceleration of the joint.

Since the driven member is connected to the drive member by means of the press fit, backlash in the joint is eliminated. The force of the press fit may be just sufficient to withstand maximal acceleration during controlled movement of the joint. For example, the press fit may be set to withstand up to 120 % of a maximum controlled acceleration force in the joint. The press fit may be referred to as a primary joint lock. The press fit force may be reduced with at least 20 %, such as at least 40 %, in comparison with a press fit force for a corresponding press fit without a shape lock, i.e. as pressed in a press fit machine.

Due to the provision of the shape lock that secures against slippage, the press fit force can be reduced. That is, the shape lock enables a reduction of a safety margin of the press fit. Moreover, the press fit force does not have to be carefully monitored in a press fit machine in order to secure against slippage in the joint. This in turn enables the drive member press fit surface and the driven member press fit surface to be made shorter along the rotation axis. Moreover, the press fit distance, i.e. the distance moved by the driven member relative to the drive member to establish the press fit, is reduced. This enables simple connection of the driven member to the drive member, e.g. simpler means of providing the press fit force can be used (like using a screw). With the joint arrangement according to the present invention the driven member can be connected to the drive member with manual force only.

The attachment portion may comprise an attachment hole provided with the attachment thread. The attachment hole may be a blind hole.

After engagement of the press fit, the attachment member may be removed. In this case, forces from the drive member are transmitted to the driven member through the press fit. As an alternative, the attachment member may be left threadingly engaging the attachment thread. In this case, forces from the drive member are transmitted to the driven member through the press fit and through the threaded engagement.

The joint arrangement may be configured such that the press fit can be established by rotating the attachment member when threadingly engaging the attachment thread. To this end, the attachment member may comprise an attachment member thread for threadingly engaging the attachment thread, and an attachment head. By threadingly engaging the attachment thread with the attachment member thread and rotating the attachment member, the attachment head will push the driven member to establish the press fit between the driven member press fit surface and the drive member press fit surface. The attachment member may for example be manually rotated with a torque wrench.

As an alternative, the joint arrangement may be configured such that the press fit can be established by pushing the driven member away from the attachment head when the attachment member threadingly engages the attachment thread. In this case, the drive member does not have to be rotationally locked when establishing the press fit since no significant torsional loads are introduced by pushing the driven member away from the attachment head. Moreover, the attachment member does not have to be threaded the entire way through the attachment thread. The driven member may be manually pushed away from the attachment head by means of reverse pliers or some other expansion tool.

In both cases, the establishment of the press fit between the drive member press fit surface and the driven member press fit surface comprises the threading engagement of the attachment thread with an attachment member passing through the through hole. The joint arrangement thus enables attachment of the driven member to the drive member in a simple manner. The driven member can thereby be connected to the drive member in the field, for example when the drive member is already mounted to an industrial actuator and/or to an electric motor.

The joint arrangement may further comprise the attachment member. The attachment member may be a bolt or screw. The attachment member may be coaxial with the rotation axis when threadingly engaging the attachment thread.

The driven member further comprises a detachment thread. The joint arrangement is configured such that the press fit can be released by threadingly engaging the detachment thread with a detachment member. The joint arrangement thus enables also detachment of the driven member from the drive member in the field in a simple manner, for example using a simple tool such as a torque wrench. The field attachable and field detachable characteristics of the joint arrangement enables a reduction of spare parts.

The joint arrangement may be configured such that the press fit can be released by rotating the detachment member when threadingly engaging the detachment thread. To this end, the detachment member may comprise a detachment head, an end portion and a detachment member thread between the detachment head and the end portion. The end portion may be cylindrical and have an external diameter so as not to interfere with the attachment thread. The detachment member thread may be configured to threadingly engage the detachment thread. By providing the attachment hole as a blind hole, threadingly engaging the detachment thread with the detachment member thread and rotating the detachment member, the end portion will initially be brought into contact with a bottom of the attachment hole. Further rotation of the detachment member will cause the driven member to separate from the drive member.

As an alternative, the detachment member may be hollow and comprise a detachment member thread. In this case, the detachment member thread may be threadingly engaged with the detachment thread and a detachment pin may be inserted through the detachment member to the bottom of the attachment hole. By pulling the detachment member proximally and pushing the detachment pin distally, the press fit can be released without needing to rotationally lock the joint.

As a further possible alternative, the detachment member may be a nipple comprising the detachment member thread. By threadingly engaging the detachment member thread with the detachment thread and by introducing fluid pressure into the through hole through the nipple, the press fit can be released by fluid pressure. Also in this case, the press fit can be released without needing to rotationally lock the joint.

The detachment thread may be provided in the through hole. The detachment thread may be provided along a major length of the through hole, such as along the entire through hole.

The detachment thread may be larger than the attachment thread. The detachment thread may be larger than the attachment member thread such that the attachment member thread does not interfere with the detachment thread. The detachment thread and the attachment thread may thus be referred to as a large thread and a small thread, respectively.

The joint arrangement may further comprise the detachment member. The detachment member may be coaxial with the rotation axis when threadingly engaging the detachment thread.

The driven member may be a pinion.

The through hole may be substantially concentric with, or concentric with, the rotation axis when the driven member is connected to the drive member. This contributes to a compact design of the joint.

Each of the drive member press fit surface and the driven member press fit surface may be tapered, such as conical. Each taper may be at least 0.5 degrees with respect to the rotation axis.

Each of the drive member shape lock structure and the driven member shape lock structure may be polygonal. For example, each of the drive member shape lock structure and the driven member shape lock structure may be triangular, or substantially triangular. By providing a polygonal driven member shape lock structure, the driven member can be produced in a near cylindrical shape. This improves the strength of the driven member.

Each of the drive member press fit surface and the driven member press fit surface may be polygonal. For example, each of the drive member press fit surface and the driven member press fit surface may be triangular, or substantially triangular.

The drive member shape lock structure may be a continuous surface. With continuous surface is meant a surface that is not interrupted by sharp edges. Alternatively, or in addition, the drive member shape lock structure may be constituted by the drive member press fit surface.

The driven member shape lock structure may be a continuous surface. Alternatively, or in addition, the driven member shape lock structure may be constituted by the driven member press fit surface.

The drive member may comprise one or more exterior flat surfaces. By means of the one or more exterior flat surfaces, the drive member can be held rotationally still when attaching and/or detaching the driven member, for example by means of pliers.

The attachment portion may be provided in the drive member. As a possible alternative, the attachment portion may be constituted by a nut for being threadingly engaged by the attachment member. In this case, the drive member may be provided between the nut and the driven member.

The attachment thread may be an interior thread. Alternatively, or in addition, the detachment thread may be an interior thread.

According to a further aspect as in claim 20, there is provided an electric motor comprising a joint arrangement according to the present invention. The drive member may be an output shaft of the electric motor.

According to a further aspect as in claim 21. there is provided an industrial actuator comprising a joint arrangement according to the present invention or an electric motor according to the present invention. The industrial actuator may be an industrial robot. Alternative examples of industrial actuators are conveyors, positioners, such as workpiece positioners, and track motion platforms.

### Brief Description of the Drawings

Further details and advantages of the present invention will become apparent from the following embodiments taken in conjunction with the drawings, wherein:
- Fig. 1:: schematically represents a side view of an industrial robot comprising an electric motor and a joint arrangement;
- Fig. 2:: schematically represents a side view of the electric motor and the joint arrangement;
- Fig. 3:: schematically represents a perspective side view of the joint arrangement in a disconnected state;
- Fig. 4:: schematically represents a perspective front view of a drive member of the joint arrangement;
- Fig. 5:: schematically represents a front view of the drive member;
- Fig. 6:: schematically represents a cross-sectional side view of the drive member;
- Fig. 7:: schematically represents a perspective front view of a driven member of the joint arrangement;
- Fig. 8:: schematically represents a front view of the driven member;
- Fig. 9:: schematically represents a cross-sectional side view of the driven member;
- Fig. 10:: schematically represents a cross-sectional side view of the joint arrangement during connection of the driven member to the drive member by means of an attachment member;
- Fig. 11:: schematically represents a cross-sectional side view of the joint arrangement during disconnection of the driven member from the drive member by means of a detachment member;
- Fig. 12:: schematically represents a perspective side view of a further example of a joint arrangement in a disconnected state;
- Fig. 13:: schematically represents a cross-sectional side view of the joint arrangement in Fig. 12;
- Fig. 14:: schematically represents a perspective side view of the joint arrangement in Figs. 12 and 13 in a connected state; and
- Fig. 15:: schematically represents a cross-sectional side view of the joint arrangement in Fig. 14.

### Detailed Description

In the following, a joint arrangement comprising a drive member and a driven member, an electric motor comprising a joint arrangement, and an industrial actuator comprising a joint arrangement, will be described. The same or similar reference numerals will be used to denote the same or similar structural features.

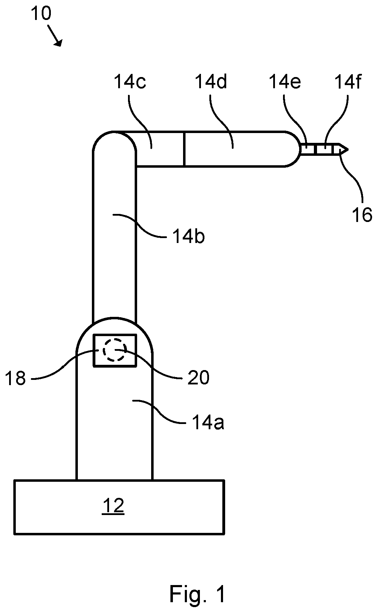

Fig. 1 schematically represents a side view of an industrial robot 10. The industrial robot 10 is one example of an industrial actuator. The industrial robot 10 of this specific example comprises a base 12, a first link 14a rotatable relative to the base 12 at a first axis, a second link 14b rotatable relative to the first link 14a at a second axis, a third link 14c rotatable relative to the second link 14b at a third axis, a fourth link 14d rotatable relative to the third link 14c at a fourth axis, a fifth link 14e rotatable relative to the fourth link 14d at a fifth axis, a sixth link 14f rotatable relative to the fifth link 14e at a sixth axis, and an end effector 16 connected to the sixth link 14f. The industrial robot 10 of this example thus comprises six degrees of freedom.

The industrial robot 10 comprises a plurality of electric motors for driving the axes. Fig. 1 shows an electric motor 18 of the industrial robot 10 for driving the second axis. The industrial robot 10 further comprises a joint arrangement 20.

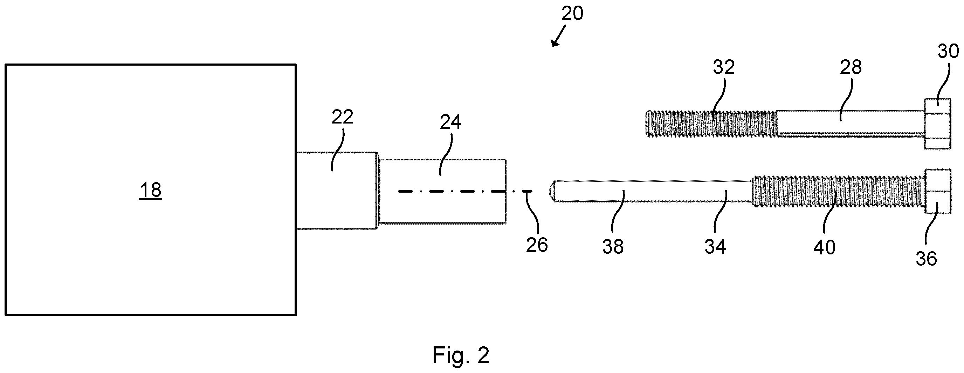

Fig. 2 schematically represents a side view of the electric motor 18 and the joint arrangement 20. The joint arrangement 20 of this example comprises a drive shaft 22 and a pinion 24. The drive shaft 22 is one example of a drive member. The pinion 24 is arranged to drive a gearbox (not shown) of the second axis. The pinion 24 is one example of a driven member. The drive shaft 22 is here constituted by an output shaft of the electric motor 18. In Fig. 2, the pinion 24 is rigidly connected to the drive shaft 22 for common rotation about a rotation axis 26. The drive shaft 22 and the pinion 24 thereby form a joint.

The joint arrangement 20 of this example further comprises an attachment screw 28. The attachment screw 28 is one example of an attachment member. The attachment screw 28 comprises an attachment head 30 at a proximal end (to the right in Fig. 2) and an attachment member thread 32 at a distal end (to the left in Fig. 2).

The joint arrangement 20 of this example further comprises a detachment screw 34. The detachment screw 34 is one example of a detachment member. The detachment screw 34 comprises a detachment head 36 at a proximal end, an end portion 38 at a distal end, and a detachment member thread 40 between the detachment head 36 and the end portion 38. The end portion 38 of this example is cylindrical.

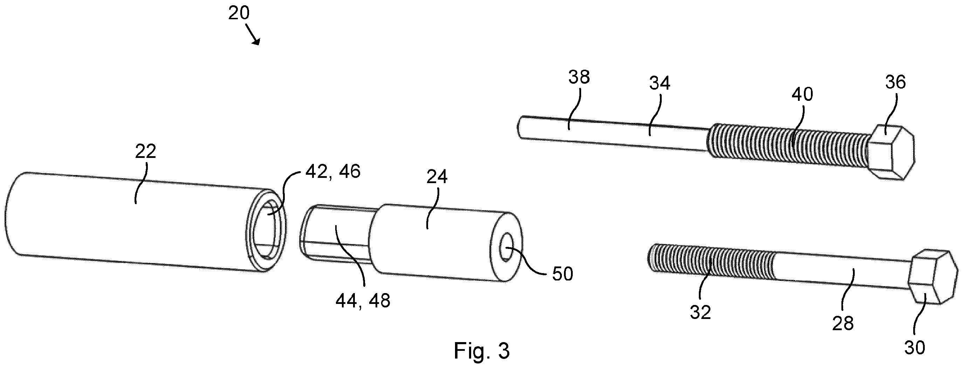

Fig. 3 schematically represents a perspective side view of the joint arrangement 20. In Fig. 3, the pinion 24 is disconnected from the drive shaft 22. The drive shaft 22 is female and the pinion 24 is male.

The drive shaft 22 comprises a drive shaft press fit surface 42. The drive shaft press fit surface 42 is one example of a drive member press fit surface. The drive shaft press fit surface 42 forms a hole.

The pinion 24 comprises a pinion press fit surface 44. The pinion press fit surface 44 is one example of a driven member press fit surface.

The drive shaft press fit surface 42 and the pinion press fit surface 44 are configured to form a press fit to connect the pinion 24 to the drive shaft 22. Each of the drive shaft press fit surface 42 and the pinion press fit surface 44 is continuous.

The drive shaft 22 further comprises a drive shaft shape lock structure 46. In this example, the drive shaft shape lock structure 46 is constituted by the drive shaft press fit surface 42. The drive shaft shape lock structure 46 is one example of a drive member shape lock structure.

The pinion 24 further comprises a pinion shape lock structure 48. In this example, the pinion shape lock structure 48 is constituted by the pinion press fit surface 44. The pinion shape lock structure 48 is one example of a driven member shape lock structure. The drive shaft shape lock structure 46 and the pinion shape lock structure 48 are configured to form a shape lock when the pinion 24 is connected to the drive shaft 22. Each of the drive shaft shape lock structure 46 and the pinion shape lock structure 48 has a polygonal cross section.

The pinion 24 further comprises a through hole 50. The through hole 50 is concentric with the rotation axis 26 when the pinion 24 is connected to the drive shaft 22.

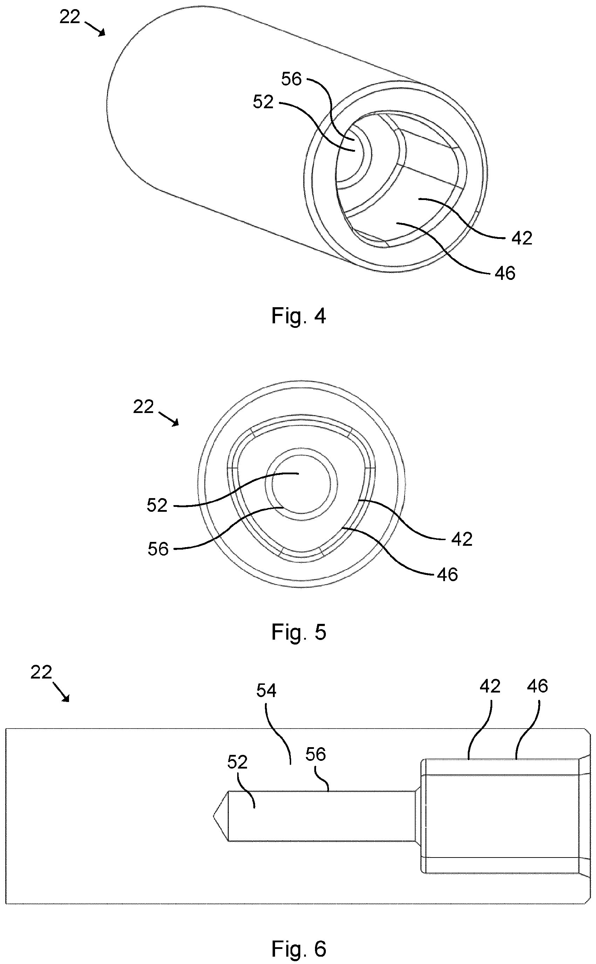

Fig. 4 schematically represents a perspective front view of the drive shaft 22, Fig. 5 schematically represents a front view of the drive shaft 22, and Fig. 6 schematically represents a cross-sectional side view of the drive shaft 22. With collective reference to Figs. 4 to 6, the drive shaft shape lock structure 46 is generally triangular with rounded edges. Both the drive shaft press fit surface 42 and the drive shaft shape lock structure 46 are provided in a proximal end of the drive shaft 22. The drive shaft press fit surface 42 has a uniform cross-section along its length.

The drive shaft 22 of this example further comprises an attachment hole 52. The attachment hole 52 is provided in an attachment portion 54 of the drive shaft 22. The attachment hole 52 is substantially centered along a length of the drive shaft 22. The attachment hole 52 is a blind hole that opens into the hole provided by the drive shaft press fit surface 42. The attachment hole 52 comprises an attachment thread 56. The attachment thread 56 is an interior thread.

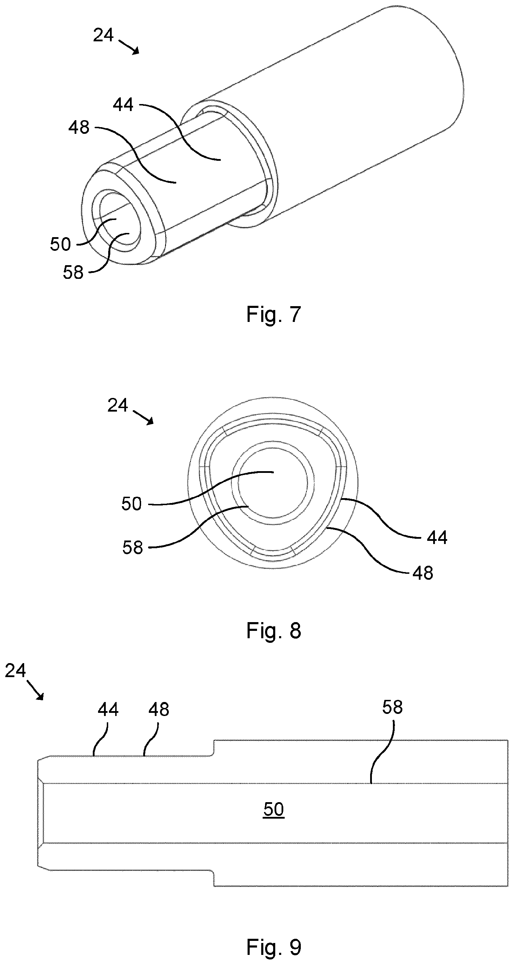

Fig. 7 schematically represents a perspective front view of a pinion 24 of the joint arrangement 20, Fig. 8 schematically represents a front view of the pinion 24, and Fig. 9 schematically represents a cross-sectional side view of the pinion 24. With collective reference to Figs. 7 to 9, the pinion shape lock structure 48 is generally triangular with rounded edges. Both the pinion press fit surface 44 and the pinion shape lock structure 48 are provided in a distal end of the pinion 24. The pinion press fit surface 44 has a uniform cross-section along its length.

The through hole 50 comprises a detachment thread 58. The detachment thread 58 is thus an interior thread. The detachment thread 58 extends through the entire through hole 50. The detachment thread 58 is larger than the attachment thread 56.

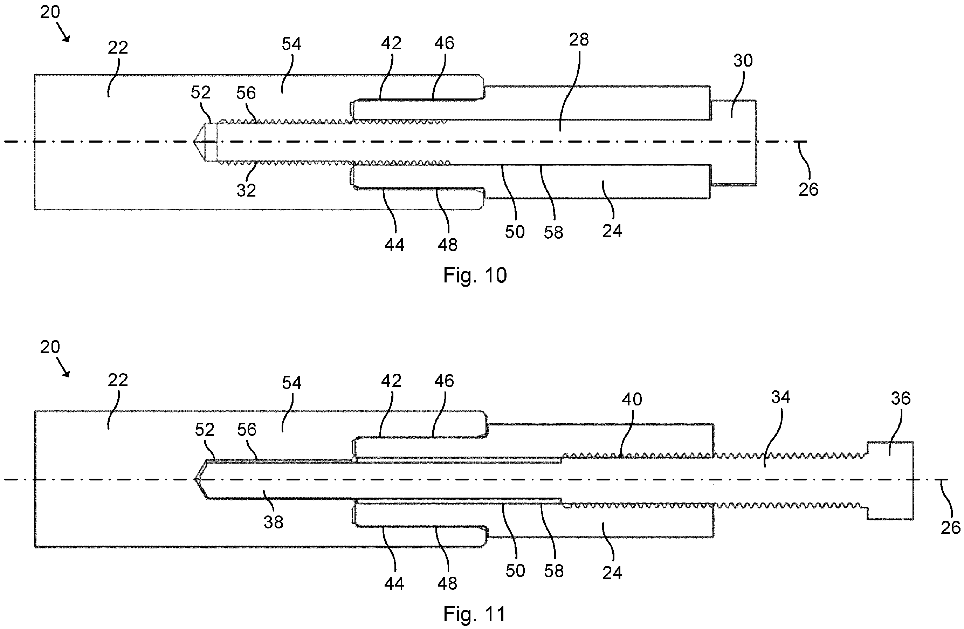

Fig. 10 schematically represents a cross-sectional side view of the joint arrangement 20 during connection of the pinion 24 to the drive shaft 22. A user can manually connect the pinion 24 to the drive shaft 22 in the field, i.e. when the electric motor 18 comprising the drive shaft 22 is already mounted to the industrial robot 10.

In order to rigidly connect the pinion 24 to the drive shaft 22, a user may first rotationally align the pinion shape lock structure 48 and the drive shaft shape lock structure 46 and push the pinion 24 slightly into the drive shaft 22. The user may then insert the attachment screw 28 through the through hole 50 and thread the attachment member thread 32 into the attachment thread 56. When moving the attachment member thread 32 through the through hole 50, the attachment member thread 32 does not interfere with the detachment thread 58. As shown in Fig. 10, the attachment screw 28 is coaxial with the rotation axis 26 when the attachment member thread 32 engages the attachment thread 56.

Once the attachment head 30 abuts the proximal end of the pinion 24, further rotation of the attachment screw 28, e.g. by means of a torque wrench, will cause a press fit to be established between the pinion press fit surface 44 and the drive shaft press fit surface 42 since the attachment head 30 pushes the pinion 24 into the drive shaft 22. In this way, the pinion 24 becomes rigidly press fitted to the drive shaft 22 by threadingly engaging the attachment thread 56 with the attachment member thread 32 and by rotating the attachment screw 28. At the same time, i.e. when the triangular pinion shape lock structure 48 enters into the triangular drive shaft shape lock structure 46, a shape lock is established between the pinion 24 and the drive shaft 22.

When screwing the attachment screw 28 into the attachment thread 56, the user may apply a counter torque to the drive shaft 22, for example by holding the drive shaft 22 by hand or with a tool. Alternatively, or in addition, a brake in the electric motor 18 may be applied to provide a counter torque.

The attachment screw 28 may be left in engagement with the attachment thread 56. In this case, forces from the drive shaft 22 may be transmitted to the pinion 24 also via the threaded engagement between the attachment screw 28 and the attachment thread 56. Alternatively, the attachment screw 28 may be removed by screwing the attachment screw 28 in an opposite direction out from the attachment thread 56.

The joint comprising the pinion 24 connected to the drive shaft 22 is backlash free due to the press fit between the pinion press fit surface 44 and the drive shaft press fit surface 42. Should the press fit fail, the shape lock formed by the drive shaft shape lock structure 46 and the pinion shape lock structure 48 prevents relative rotational movements between the drive shaft 22 and the pinion 24. The shape lock enables the press fit force to be lower in comparison with a joint not comprising a shape lock. That is, a smaller safety margin may be provided for the press fit of the joint. This also enables a length of the drive shaft press fit surface 42 and the pinion press fit surface 44 to be made relatively short along the rotation axis 26, thus contributing to a compact design of the joint. As shown in Fig. 10, the drive shaft press fit surface 42 and the pinion press fit surface 44 are kept relatively short. In this way, the pinion 24 can be pressed together with the drive shaft 22 in a simple way, e.g. by using a torque wrench.

The field attachable joint also provides a "cleaner" motor module. That is, since the customer can attach the pinion 24 to the drive shaft 22 in the field, a design interface can be provided between the pinion 24 and the drive shaft 22 of the electric motor 18, instead of an interface provided between the pinion 24 and the gearbox. This contributes to an improved modular design. The design interface may for example specify a torque to be transmitted.

Fig. 11 schematically represents a cross-sectional side view of the joint arrangement 20 during disconnection of the pinion 24 from the drive shaft 22. A user can also manually disconnect the pinion 24 from the drive shaft 22 in the field.

In order to disconnect the pinion 24 from the drive shaft 22, the user may disconnect the attachment screw 28 from the attachment thread 56 (if this has not been done previously). The user may then insert the detachment screw 34 into the through hole 50 and thread the detachment member thread 40 into the detachment thread 58. As shown in Fig. 11, the detachment screw 34 is coaxial with the rotation axis 26 when the detachment member thread 40 engages the detachment thread 58. The end portion 38 does not interfere with the attachment thread 56 when entering the attachment hole 52.

Once the end portion 38 abuts the bottom of the attachment hole 52, further rotation of the detachment screw 34, e.g. by means of a torque wrench, will cause the press fit between the pinion press fit surface 44 and the drive shaft press fit surface 42 to be released. In this way, the pinion 24 can be released from the drive shaft 22 by threadingly engaging the detachment thread 58 with the detachment member thread 40 and by rotating the detachment screw 34.

When screwing the detachment screw 34 into the detachment thread 58, the user may apply a counter torque to the drive shaft 22, for example by holding the drive shaft 22 by hand or with a tool. Alternatively, or in addition, a brake in the electric motor 18 may be applied to provide a counter torque.

A user can thus mount and dismount the pinion 24 to and from the drive shaft 22 in the field in a simple and safe manner by only carrying a torque wrench, the attachment screw 28 and the detachment screw 34. The pinion 24 of this example is thus both field attachable and field detachable. This enables a reduction of spare parts. For example, instead of ordering a particular combination of a pinion 24 and a drive shaft 22, or a particular combination of a pinion 24 and an electric motor 18 comprising the drive shaft 22, only the pinion 24 or only the drive shaft 22 may be ordered by a customer.

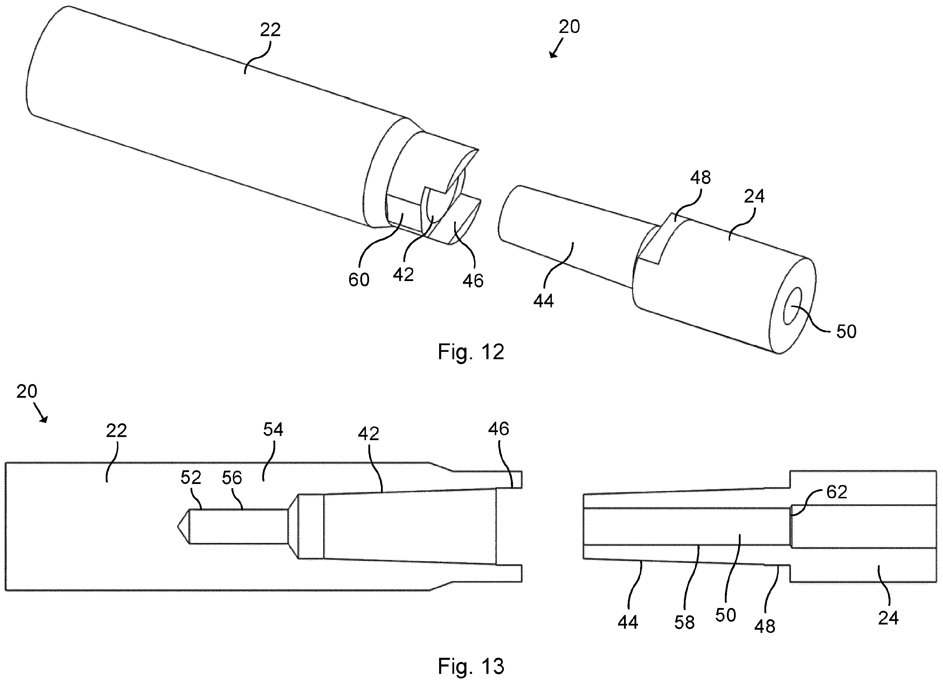

Fig. 12 schematically represents a perspective side view of a further example of a joint arrangement 20, and Fig. 13 schematically represents a cross-sectional side view of the joint arrangement 20 in Fig. 12. With collective reference to Figs. 12 and 13, mainly differences with respect to Figs. 1 to 11 will be described.

In Figs. 12 and 13, each of the drive shaft press fit surface 42 and the pinion press fit surface 44 is conical. Moreover, the drive shaft shape lock structure 46 and the pinion shape lock structure 48 is discontinuous in relation to the drive shaft press fit surface 42 and the pinion press fit surface 44, respectively. The drive shaft shape lock structure 46 is proximal of the drive shaft press fit surface 42. The pinion shape lock structure 48 is proximal of the pinion press fit surface 44. The shape lock of this example may therefore be said to be an external shape lock.

The drive shaft shape lock structure 46 of this example comprises two flat surfaces, each parallel with the rotation axis 26. Correspondingly, the pinion shape lock structure 48 of this example comprises two flat surfaces, each parallel with the rotation axis 26.

The drive shaft 22 comprises two exterior flat surfaces 60 (only one is visible in Fig. 12). The exterior flat surfaces 60 facilitate the application of a counter torque during attachment or detachment of the pinion 24, for example by application of pliers to the exterior flat surfaces 60.

The pinion 24 of this example also comprises a step 62 in the through hole 50. The detachment thread 58 is provided distally of the step 62. The through hole 50 is larger proximal of the step 62 than distal of the step 62.

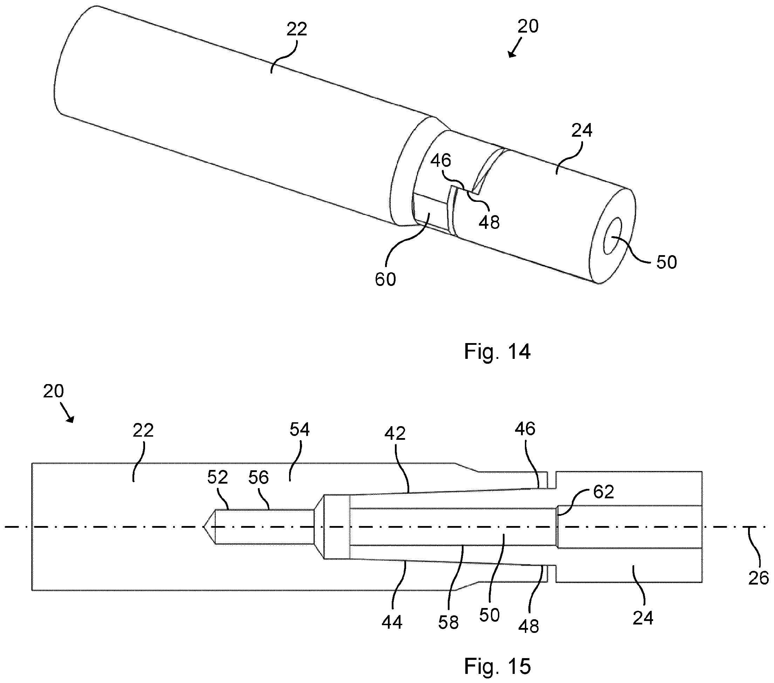

Fig. 14 schematically represents a perspective side view of the joint arrangement 20 in Figs. 12 and 13, and Fig. 15 schematically represents a cross-sectional side view of the joint arrangement 20 in Fig. 14. With collective reference to Figs. 14 and 15, the pinion 24 has been connected to the drive shaft 22 by means of the attachment screw 28 in the same way as described in connection with Fig. 10. When the pinion 24 is connected to the drive shaft 22 as shown in Figs. 14 and 15, the press fit between the drive shaft press fit surface 42 and the pinion press fit surface 44 provides a backlash free joint. In addition, the shape lock between the drive shaft shape lock structure 46 and the pinion shape lock structure 48 prevents relative rotational movements between the drive shaft 22 and the pinion 24 should the press fit fail.

The pinion 24 may be disconnected from the drive shaft 22 by means of the detachment screw 34 in the same way as described in connection with Fig. 11. Thus, also the joint arrangement 20 of this example is field attachable and field detachable.

While the present invention has been described with reference to exemplary embodiments, it will be appreciated that the present invention is not limited to what has been described above. For example, it will be appreciated that the dimensions of the parts may be varied as needed. Accordingly, it is intended that the present invention may be limited only by the scope of the claims appended hereto.

## Claims

1. A joint arrangement (20) comprising:
- a drive member (22) rotatable about a rotation axis (26), the drive member (22) comprising a drive member press fit surface (42) and a drive member shape lock structure (46);
- an attachment portion (54) having an attachment thread (56); and
- a driven member (24) comprising a driven member press fit surface (44), a driven member shape lock structure (48) and a through hole (50);
wherein the joint arrangement (20) is configured such that the driven member (24) can be rigidly connected to the drive member (22) by means of a press fit between the drive member press fit surface (42) and the driven member press fit surface (44) by threadingly engaging the attachment thread (56) with an attachment member (28) passing through the through hole (50); and
wherein the joint arrangement (20) is configured such that a shape lock is provided between the drive member shape lock structure (46) and the driven member shape lock structure (48) when the driven member (24) is connected to the drive member (22);
**characterised in that**,
the driven member (24) further comprises a detachment thread (58); and
wherein the joint arrangement (20) is configured such that the press fit can be released by threadingly engaging the detachment thread (58) with a detachment member (34).

2. The joint arrangement (20) according to claim 1, wherein the joint arrangement (20) is configured such that the press fit can be established by rotating the attachment member (28) when threadingly engaging the attachment thread (56).

3. The joint arrangement (20) according to claim 1, wherein the attachment member (28) comprises an attachment head (30), and wherein the joint arrangement (20) is configured such that the press fit can be established by pushing the driven member (24) away from the attachment head (30) when the attachment member (28) threadingly engages the attachment thread (56).

4. The joint arrangement (20) according to any of the preceding claims, further comprising the attachment member (28).

5. The joint arrangement (20) according to any of the preceding claims, wherein the joint arrangement (20) is configured such that the press fit can be released by rotating the detachment member (34) when threadingly engaging the detachment thread (58).

6. The joint arrangement (20) according to any of the preceding claims, wherein the detachment thread (58) is provided in the through hole (50).

7. The joint arrangement (20) according to any of the preceding claims, wherein the detachment thread (58) is larger than the attachment thread (56).

8. The joint arrangement (20) according to any of the preceding claims, further comprising the detachment member (34).

9. The joint arrangement (20) according to any of the preceding claims, wherein the driven member (24) is a pinion.

10. The joint arrangement (20) according to any of the preceding claims, wherein the through hole (50) is substantially concentric with the rotation axis (26) when the driven member (24) is connected to the drive member (22).

11. The joint arrangement (20) according to any of the preceding claims, wherein each of the drive member press fit surface (42) and the driven member press fit surface (44) is tapered.

12. The joint arrangement (20) according to any of the preceding claims, wherein each of the drive member shape lock structure (46) and the driven member shape lock structure (48) is polygonal.

13. The joint arrangement (20) according to any of the preceding claims, wherein each of the drive member press fit surface (42) and the driven member press fit surface (44) is polygonal.

14. The joint arrangement (20) according to any of the preceding claims, wherein the drive member shape lock structure (46) is a continuous surface.

15. The joint arrangement (20) according to any of the preceding claims, wherein the drive member shape lock structure (46) is constituted by the drive member press fit surface (42).

16. The joint arrangement (20) according to any of the preceding claims, wherein the driven member shape lock structure (48) is a continuous surface.

17. The joint arrangement (20) according to any of the preceding claims, wherein the driven member shape lock structure (48) is constituted by the driven member press fit surface (44).

18. The joint arrangement (20) according to any of the preceding claims, wherein the drive member (22) comprises one or more exterior flat surfaces (60).

19. The joint arrangement (20) according to any of the preceding claims, wherein the attachment portion (54) is provided in the drive member (22).

20. An electric motor (18) comprising a joint arrangement (20) according to any of the preceding claims.

21. An industrial actuator (10) comprising a joint arrangement (20) according to any of claims 1 to 19 or an electric motor (18) according to claim 20.

## Patentansprüche

1. Gelenkanordnung (20), umfassend:
- ein Antriebselement (22), das um eine Drehachse (26) drehbar ist, wobei das Antriebselement (22) eine Antriebselement-Presssitzfläche (42) und eine Antriebselement-Formschlussstruktur (46) umfasst;
- einen Befestigungsabschnitt (54), der ein Befestigungsgewinde (56) aufweist; und
- ein Abtriebselement (24), das eine Abtriebselement-Presssitzfläche (44), eine Abtriebselement-Formschlussstruktur (48) und ein Durchgangsloch (50) umfasst;
wobei die Gelenkanordnung (20) derart ausgelegt ist, dass das Abtriebselement (24) mittels eines Presssitzes zwischen der Antriebselement-Presssitzfläche (42) und der Abtriebselement-Presssitzfläche (44) durch einen Gewindeeingriff des Befestigungsgewindes (56) mit einem Befestigungselement (28), das durch das Durchgangsloch (50) hindurchgeht, starr mit dem Antriebselement (22) verbindbar ist; und
wobei die Gelenkanordnung (20) derart ausgelegt ist, dass ein Formschluss zwischen der Antriebselement-Formschlussstruktur (46) und der Abtriebselement-Formschlussstruktur (48) bereitgestellt ist, wenn das Abtriebselement (24) mit dem Antriebselement (22) verbunden ist;
**dadurch gekennzeichnet, dass**
das Abtriebselement (24) ferner ein Freigabegewinde (58) umfasst; und
wobei die Gelenkanordnung (20) derart ausgelegt ist, dass der Presssitz durch einen Gewindeeingriff des Freigabegewindes (58) mit einem Freigabeelement (34) lösbar ist.

2. Gelenkanordnung (20) nach Anspruch 1, wobei die Gelenkanordnung (20) derart ausgelegt ist, dass bei einem Gewindeeingriff mit dem Befestigungsgewinde (56) der Presssitz durch Drehen des Befestigungselements (28) herstellbar ist.

3. Gelenkanordnung (20) nach Anspruch 1, wobei das Befestigungselement (28) einen Befestigungskopf (30) umfasst, und wobei die Gelenkanordnung (20) derart ausgelegt ist, dass bei einem Gewindeeingriff des Befestigungselements (28) mit dem Befestigungsgewinde (56) der Presssitz durch Drücken des Abtriebselements (24) weg von dem Befestigungskopf (30) herstellbar ist.

4. Gelenkanordnung (20) nach einem der vorhergehenden Ansprüche, ferner umfassend das Befestigungselement (28) .

5. Gelenkanordnung (20) nach einem der vorhergehenden Ansprüche, wobei die Gelenkanordnung (20) derart ausgelegt ist, dass bei einem Gewindeeingriff mit dem Freigabegewinde (58) der Presssitz durch Drehen des Freigabeelements (34) lösbar ist.

6. Gelenkanordnung (20) nach einem der vorhergehenden Ansprüche, wobei das Freigabegewinde (58) in dem Durchgangsloch (50) bereitgestellt ist.

7. Gelenkanordnung (20) nach einem der vorhergehenden Ansprüche, wobei das Freigabegewinde (58) größer als das Befestigungsgewinde (56) ist.

8. Gelenkanordnung (20) nach einem der vorhergehenden Ansprüche, ferner umfassend das Freigabeelement (34).

9. Gelenkanordnung (20) nach einem der vorhergehenden Ansprüche, wobei das Abtriebselement (24) ein Ritzel ist.

10. Gelenkanordnung (20) nach einem der vorhergehenden Ansprüche, wobei das Durchgangsloch (50) im Wesentlichen konzentrisch mit der Drehachse (26) ist, wenn das Abtriebselement (24) mit dem Antriebselement (22) verbunden ist.

11. Gelenkanordnung (20) nach einem der vorhergehenden Ansprüche, wobei jede der Antriebselement-Presssitzfläche (42) und der Abtriebselement-Presssitzfläche (44) verjüngt ist.

12. Gelenkanordnung (20) nach einem der vorhergehenden Ansprüche, wobei jede der Antriebselement-Formschlussstruktur (46) und der Abtriebselement-Formschlussstruktur (48) polygonal ist.

13. Gelenkanordnung (20) nach einem der vorhergehenden Ansprüche, wobei jede der Antriebselement-Presssitzfläche (42) und der Abtriebselement-Presssitzfläche (44) polygonal ist.

14. Gelenkanordnung (20) nach einem der vorhergehenden Ansprüche, wobei die Antriebselement-Formschlussstruktur (46) eine durchgehende Fläche ist.

15. Gelenkanordnung (20) nach einem der vorhergehenden Ansprüche, wobei die Antriebselement-Formschlussstruktur (46) durch die Antriebselement-Presssitzfläche (42) gebildet ist.

16. Gelenkanordnung (20) nach einem der vorhergehenden Ansprüche, wobei die Abtriebselement-Formschlussstruktur (48) eine durchgehende Fläche ist.

17. Gelenkanordnung (20) nach einem der vorhergehenden Ansprüche, wobei die Abtriebselement-Formschlussstruktur (48) durch die Abtriebselement-Presssitzfläche (44) gebildet ist.

18. Gelenkanordnung (20) nach einem der vorhergehenden Ansprüche, wobei das Antriebselement (22) eine oder mehrere flache Außenflächen (60) umfasst.

19. Gelenkanordnung (20) nach einem der vorhergehenden Ansprüche, wobei der Befestigungsabschnitt (54) in dem Antriebselement (22) bereitgestellt ist.

20. Elektromotor (18), umfassend eine Gelenkanordnung (20) nach einem der vorhergehenden Ansprüche.

21. Industrie-Aktuator (10), umfassend eine Gelenkanordnung (20) nach einem der Ansprüche 1 bis 19 oder einen Elektromotor (18) nach Anspruch 20.

## Revendications

1. Agencement d'articulation (20) comprenant :
- un élément d'entraînement (22) pouvant tourner autour d'un axe de rotation (26), l'élément d'entraînement (22) comprenant une surface d'ajustement pressé d'élément d'entraînement (42) et une structure de verrou de forme d'élément d'entraînement (46) ;
- une partie de fixation (54) ayant un filetage de fixation (56) ; et
- un élément entraîné (24) comprenant une surface d'ajustement pressé d'élément entraîné (44), une structure de verrou de forme d'élément moteur (48) et un trou traversant (50) ;
l'agencement d'articulation (20) étant conçu de sorte que l'élément entraîné (24) puisse être solidarisé à l'élément d'entraînement (22) au moyen d'un ajustement pressé entre la surface d'ajustement pressé d'élément d'entraînement (42) et la surface d'ajustement pressé d'élément entraîné (44) en mettant en prise par filetage le filetage de fixation (56) avec un élément de fixation (28) passant à travers le trou traversant (50) ; et
l'agencement d'articulation (20) étant conçu de sorte qu'un verrou de forme soit fourni entre la structure de verrou de forme d'élément d'entraînement (46) et la structure de verrou de forme d'élément entraîné (48) lorsque l'élément entraîné (24) est relié à l'élément d'entraînement (22) ;
**caractérisé en ce que**,
l'élément entraîné (24) comprend en outre un filetage de séparation (58) ; et
l'agencement d'articulation (20) étant conçu de sorte que l'ajustement pressé puisse être libéré en mettant en prise filetée le filetage de séparation (58) avec un élément de séparation (34).

2. Agencement d'articulation (20) selon la revendication 1, l'agencement d'articulation (20) étant conçu de sorte que l'ajustement pressé puisse être établi par la rotation de l'élément de fixation (28) lors de la mise en prise filetée du filetage de fixation (56).

3. Agencement d'articulation (20) selon la revendication 1, l'élément de fixation (28) comprenant une tête de fixation (30), et l'agencement d'articulation (20) étant conçu de sorte que l'ajustement pressé puisse être établi en poussant l'élément entraîné (24) à l'opposé de la tête de fixation (30) lorsque l'élément de fixation (28) vient en prise filetée avec le filetage de fixation (56).

4. Agencement d'articulation (20) selon l'une quelconque des revendications précédentes, comprenant en outre l'élément de fixation (28).

5. Agencement d'articulation (20) selon l'une quelconque des revendications précédentes, l'agencement d'articulation (20) étant conçu de sorte que l'ajustement pressé puisse être libéré par la rotation de l'élément de séparation (34) lors de la mise en prise filetée du filetage de séparation (58).

6. Agencement d'articulation (20) selon l'une quelconque des revendications précédentes, le filetage de séparation (58) étant situé dans la trou traversant (50) .

7. Agencement d'articulation (20) selon l'une quelconque des revendications précédentes, le filetage de séparation (58) étant plus grand que le filetage de fixation (56).

8. Agencement d'articulation (20) selon l'une quelconque des revendications précédentes, comprenant en outre l'élément de séparation (34).

9. Agencement d'articulation (20) selon l'une quelconque des revendications précédentes, l'élément d'entraînement (24) étant un pignon.

10. Agencement d'articulation (20) selon l'une quelconque des revendications précédentes, le trou traversant (50) étant sensiblement concentrique avec l'axe de rotation (26) lorsque l'élément entraîné (24) est relié à l'élément d'entraînement (22).

11. Agencement d'articulation (20) selon l'une quelconque des revendications précédentes, chacune de la surface d'ajustement pressé d'élément d'entraînement (42) et de la surface d'ajustement pressé d'élément entraîné (44) étant conique.

12. Agencement d'articulation (20) selon l'une quelconque des revendications précédentes, la structure de verrou de forme d'élément d'entraînement (46) et la structure de verrou de forme d'élément entraîné (48) étant polygonales.

13. Agencement d'articulation (20) selon l'une quelconque des revendications précédentes, chacune de la surface d'ajustement pressé d'élément d'entraînement (42) et de la surface d'ajustement pressé d'élément entraîné (44) étant polygonale.

14. Agencement d'articulation (20) selon l'une quelconque des revendications précédentes, la structure de verrou de forme d'élément d'entraînement (46) étant une surface continue.

15. Agencement d'articulation (20) selon l'une quelconque des revendications précédentes, la structure de verrou de forme d'élément d'entraînement (46) étant constituée par la surface d'ajustement pressé d'élément d'entraînement (42).

16. Agencement d'articulation (20) selon l'une quelconque des revendications précédentes, la structure de verrou de forme d'élément entraîné (48) étant une surface continue.

17. Agencement d'articulation (20) selon l'une quelconque des revendications précédentes, la structure de verrou de forme d'élément entraîné (48) étant constituée par la surface d'ajustement pressé d'élément entraîné (44).

18. Agencement d'articulation (20) selon l'une quelconque des revendications précédentes, l'élément d'entraînement (22) comprenant une ou plusieurs surfaces plates extérieures (60).

19. Agencement d'articulation (20) selon l'une quelconque des revendications précédentes, la partie de fixation (54) étant située dans l'élément d'entraînement (22) .

20. Moteur électrique (18) comprenant un agencement d'articulation (20) selon l'une quelconque des revendications précédentes.

21. Actionneur industriel (10) comprenant un agencement d'articulation (20) selon l'une quelconque des revendications 1 à 19 ou un moteur électrique (18) selon la revendication 20.
